# EUROPEAN PATENT SPECIFICATION

(11) **EP 4 415 934 B1**
(45) Date of publication and mention of the grant of the patent: **15.04.2026**
(21) Application number: 22798155.2
(22) Date of filing: 12.10.2022
(51) Int. Cl.: B25J 15/02

(54) **GRIPPER ASSEMBLY FOR A ROBOTIC MANIPULATOR**
GREIFERANORDNUNG FÜR EINEN ROBOTERMANIPULATOR
ENSEMBLE PRÉHENSEUR POUR MANIPULATEUR ROBOTISÉ

(30) Priority: 13.10.2021 GB 202114638
(43) Date of publication of application: 21.08.2024
(73) Proprietor: Ocado Innovation Limited, Hatfield, Hertfordshire AL10 9UL (GB)
(72) Inventor: AZAD, Morteza, Hatfield, Hertfordshire AL10 9UL (GB); MATHEW, Michael, Hatfield, Hertfordshire AL10 9UL (GB); DEL SOL ACERO, Enrique, Hatfield, Hertfordshire AL10 9UL (GB)
(74) Representative: Ocado Group IP Department
(86) International application number: PCT/EP2022/078399
(87) International publication number: WO 2023/062076

(56) References cited:
- DE-A1- 3 910 801
- US-A- 4 680 523
- US-A- 4 765 668
- US-A1- 2020 078 959
- US-B2- 10 647 006
- US-B2- 9 737 994

## Description

The present disclosure relates to a gripper assembly for a robotic manipulator. Aspects of the invention relate to the gripper assembly and to the robotic manipulator comprising the gripper assembly.

### BACKGROUND

Known robotic grippers operate with indirect force control schemes using either a position control scheme, or a force plus position control scheme. In the position control scheme, the respective positions of the gripper's finger assemblies are controlled independently of the gripping force applied at the finger assemblies. In the force plus position control scheme, the respective positions of the finger assemblies are controlled with respect to a force limit. That is, force plus position control schemes do not maintain or adjust the gripping force, but simply limit the maximum force that can be applied at the finger assemblies. The problem with these indirect force control schemes is that they need extra force sensors at the contact areas of the finger assemblies in order to measure gripping force. Also, since the force control is done indirectly through position, even if there is a feedback of the gripping force, the control is prone to instability due to contact modelling errors. Also, most of the grippers in the market are not backdrivable, making them less safe to interact with. Such control schemes are also a source of instability and poor control performance.

US4680523A discloses a gripper assembly comprising a stepper motor operatively coupled to a finger assembly. The stepper motor, upon receipt of discrete electrical input pulses, undergoes discrete incremental angular displacements and thus causes the finger assembly to undergo predetermined incremental displacements. A control means is provided for regulating the motor's rate of displacement in response to certain conditions, such as the proximity of the finger assembly to an article to be gripped.

US10647006B2 discloses a gripper assembly comprising a pair of finger members and a drive unit that moves at least one finger member with respective to the other finger member.

It is an aim of the present invention to address one or more of the disadvantages associated with known robotic grippers.

### SUMMARY

Accordingly, there is provided, in a first aspect, a gripper assembly for a robotic manipulator, the gripper assembly comprising first and second finger assemblies, a ball screw assembly comprising a first ball screw nut connected to the first finger assembly and a ball screw shaft comprising a first section upon which the first ball screw nut is movably mounted, the ball screw shaft being rotatable about its longitudinal axis, and an actuator directly connected to the ball screw shaft and configured to rotate the ball screw shaft about its longitudinal axis, wherein the ball screw nut and ball screw shaft are configured to move the first finger assembly in a direction of the second finger assembly when the ball screw shaft is rotated in one of a clockwise or anticlockwise direction and to move the first finger assembly in a direction away from the second finger assembly when the ball screw shaft is rotated in the other of the clockwise or anticlockwise directions. The gripper assembly further comprises one or more guide rails, a first carriage assembly movably mounted to the one or more guide rails and a first support assembly configured to connect the first ball screw nut and the first finger assembly to the carriage assembly. The first support assembly is configured to provide a rigid connection between the first finger assembly and the first carriage assembly and a movable connection between the first ball screw nut and the first carriage assembly. This configuration isolates the ball screw actuator assembly from any forces applied to the gripper assembly as a result of manipulating an item and transfers them to the first carriage assembly and the one or more guide rails. In particular, it ensures that any radial forces are not brought to bear on the ball screw shaft, which could bend the ball screw shaft and consequently increase the friction between the ball screws and ball screw shaft.

This arrangement is advantageous in that it also enables the gripper assembly to be controlled using a direct force control scheme as opposed to using a position control scheme. When using position control schemes, target positions for finger assemblies are determined based on an item to be manipulated or grasped and the force applied to the item is a function of the target positions. Such control schemes are appropriate for applications in which the items to be manipulated have generally similar or the same characteristics. In other applications, however, such as an online grocery retail operation, having 1,000s or 10,000s of items of varying characteristics (e.g., shape, size, weight, rigidity, coefficient of friction, etc.,), such control schemes are inappropriate as two items of similar sizes might be very different in other respects, and so the force applied to them by the finger assemblies, determined as a function of their respective positions, might be unsuitable. That is, in most instances, the relationship between the applied force and position of the finger assemblies is unknown when using position control schemes. With the present arrangement, however, which lends itself to a direct force control scheme, target positions or any feedback regarding the positions of the finger assemblies is not required. Instead, the output torque of the actuator is controlled to match the desired force applied by finger assemblies to the item being manipulated. This is made possible by the novel arrangement of using a ball screw actuator assembly that includes a direct connection between the actuator and the ball screw shaft to move the finger assemblies. The ball screw actuator assembly is a low friction transmission device, which, in this instance, is used to convert output torque of the actuator to axially reciprocating movement of the finger assemblies. Because it is a low friction transmission device, and in the absence of other transmission mechanisms, such as a gearing arrangement between the actuator and the ball screw shaft, the applied force of the finger assemblies is proportional to the torque output of the actuator, meaning that the applied force can be accurately mapped with respect to the torque output to provide precise direct force control capability without the need for external force measurement.

Also, because the ball screw actuator assembly provides a low friction transmission between the actuator and finger assemblies the gripper assembly is mechanically backdrivable. That is, the finger assemblies can be moved manually, towards or away from each other, to effect rotation of the ball screw shaft. This ensures that the gripper assembly has a degree of compliance, permitting safe physical interaction with its workspace.

Moreover, the ball screw actuator assembly can be preloaded to reduce any clearances between the raceways of the first and second ball screw nuts and the first and second sections of the ball screw shaft, minimising the "axial play" or "backlash" within the assembly, which could otherwise lead errors in the force applied by the finger assemblies to an item being manipulated.

Finally, the one or more guide rails guide the movement of the first finger assembly and prevent the first ball screw nut from rotating when the ball screw shaft is rotated, fixing the rotational position of the first ball screw nut.

Optionally, the ball screw actuator assembly further comprises a second ball screw nut connected to the second finger assembly and wherein the ball screw shaft further comprises a second section upon which the second ball screw nut is movably mounted and wherein the first and second ball screw nuts and the ball screw shaft are configured to move the first and second finger assemblies towards each other when the ball screw shaft is rotated in one of the clockwise or anticlockwise directions and to move the first and second finger assemblies away from each other when the ball screw shaft is rotated in the other of the clockwise or anticlockwise directions. This configuration provides two opposed movable finger assemblies, offering a great range of positions.

Optionally, the gripper assembly further comprises a second carriage assembly movably mounted to the one or more guide rails and a second support assembly configured to connect the second ball screw nut and the second finger assembly to the second carriage assembly. This arrangement prevents the second ball screw nut from rotating when the ball screw shaft is rotated, fixing the rotational position of the second ball screw nut.

Optionally, the second support assembly is configured to provide a rigid connection between the second finger assembly and the second carriage assembly and a movable connection between the second ball screw nut and the second carriage assembly. This arrangement, in particular, isolates the ball screw shaft from any radial loads produced during the manipulation of an item.

Optionally, the one or more guide rails comprises two guide rails, each guide rails of the two guide rails being positioned either side of the ball screw shaft. This arrangement provides a uniform force distribution across the gripper assembly when manipulating an item.

Optionally, the actuator is located between the first and second sections of the ball screw shaft. This arrangement provides a more uniform rotation of the ball screw shaft, limiting any torsional movement experienced by the shaft.

Alternatively, the actuator is located at one end of the ball screw shaft.

Optionally, the first section of the ball screw shaft comprises one of a right- or left-hand helical raceway and the second section of the ball screw shaft comprises the other of the right- or left-hand helical raceways.

Optionally, the ball screw actuator assembly further comprises a second ball screw nut connected to the second finger assembly, a second ball screw shaft comprising a section upon which the second ball screw nut is movably mounted, the second ball screw shaft being rotatable about its longitudinal axis and a second actuator directly connected to the second ball screw shaft and configured to rotate the second ball screw shaft about its longitudinal axis, wherein the second ball screw nut and second ball screw shaft are configured to move the second finger assembly in a direction of the first finger assembly when the second ball screw shaft is rotated in one of the clockwise or anticlockwise directions and to move the second finger assembly in a direction away from the first finger assembly when the second ball screw shaft is rotated in the other of the clockwise or anticlockwise directions.

According to a second aspect, there is provided a robotic manipulator comprising a gripper assembly according to the first aspect.

According to a third aspect, there is provided a manipulator apparatus comprising a robotic manipulator according to the second aspect.

### BRIEF DESCRIPTION OF THE DRAWINGS

These and other aspects of the invention will now be described, by way of example only, and with reference to the accompanying drawings, in which:
Figure 1 is a schematic depiction of a picking system comprising a manipulator apparatus according to an embodiment of the invention;
Figure 2a is an isometric view of a gripper assembly according to an embodiment of the invention for use with the manipulator apparatus of Figure 1;
Figure 2b is a cross-sectional view on a vertical plane of the gripper assembly of Figure 2a;
Figure 2c is a cross-sectional view on a horizontal plane of the gripper assembly of Figure 2a;
Figure 3 is an isometric view of finger and support assemblies, and parts of a ball screw actuator and carriage assemblies of the gripper assembly of Figure 2a;
Figure 4 is an isometric view of one of the support assemblies of Figure 3;
Figure 5 is a schematic depiction of a gripper assembly according to another embodiment of the invention; and,
Figure 6 is a schematic depiction of a gripper assembly according to yet another embodiment of the invention.

In the drawings, like features are denoted by like reference signs where appropriate.

### DETAILED DESCRIPTION

In the following description, some specific details are included to provide a thorough understanding of various disclosed embodiments. One skilled in the relevant art, however, will recognise that embodiments may be practiced without one or more of these specific details, or with other methods, components, materials, etc. In some instances, well-known structures associated with gripper assemblies and/or robotics, such as processors, sensors, storage devices, network interfaces, workpieces, tensile members, fasteners, electrical connectors, mixers, and the like are not shown or described in detail to avoid unnecessarily obscuring descriptions of the disclosed embodiments.

Unless the context requires otherwise, throughout the specification and the appended claims, the word "comprise" and variations thereof, such as, "comprises" and "comprising" are to be construed in an open, inclusive sense that is as "including, but not limited to."

Reference throughout this specification to "one", "an", or "another" applied to "embodiment", "example", means that a particular referent feature, structure, or characteristic described in connection with the embodiment, example, or implementation is included in at least one embodiment, example, or implementation. Thus, the appearances of the phrase "in one embodiment" or the like in various places throughout this specification are not necessarily all referring to the same embodiment. Furthermore, the particular features, structures, or characteristics may be combined in any suitable manner in one or more embodiments, examples, or implementations.

It should be noted that, as used in this specification and the appended claims, the users forms "a", "an", and "the" include plural referents unless the content clearly dictates otherwise. Thus, for example, reference to a robot including "a gripper assembly" includes a gripper assembly, or two or more gripper assemblies. It should also be noted that the term "or" is generally employed in its sense including "and/or" unless the content clearly dictates otherwise.

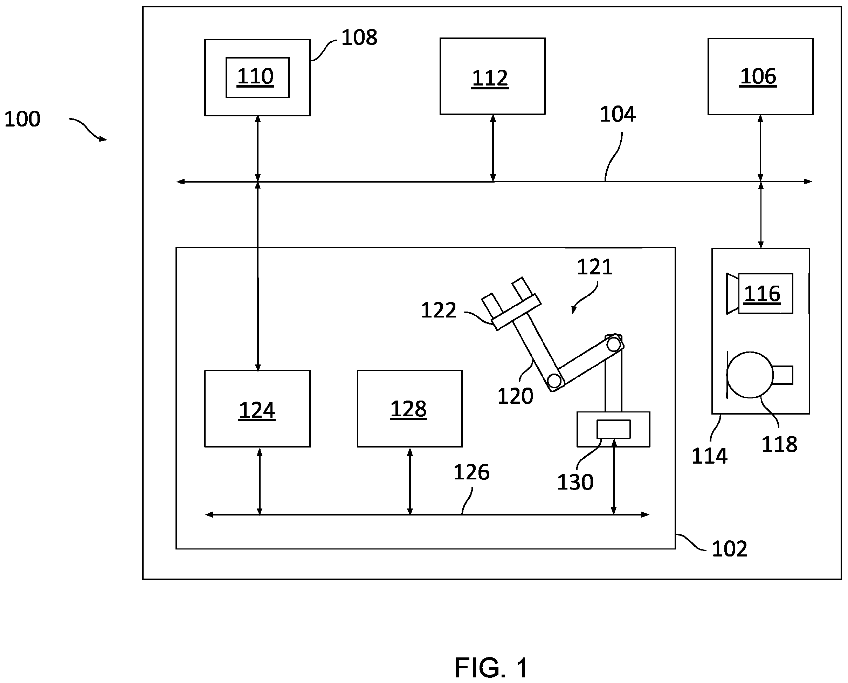

With reference to Figure 1, there is illustrated an example of a picking system 100 such that may be adapted for use with the present invention. The picking system 100 may form part of an online retail operation, such as an online grocery retail operation, but may also be applied to any other operation requiring the picking and/or sorting of items. In this example, the system 100 includes a manipulator apparatus 102 comprising a robotic manipulator 121 configured to pick an item from a first location and place the item in a second location. The manipulator apparatus 102 is communicatively coupled via a communication interface 104 to other components of the system 100, such as to one or more optional operator interfaces 106, from which an observer may observe or monitor the operation of the system 100 and the manipulator apparatus 102. The observer interfaces 106 may include a WIMP interface and an output display of explanatory text or a dynamic representation of the manipulator apparatus 102 in a context or scenario. For example, the dynamic representation of the manipulator apparatus 102 may include video and audio feed, for instance a computer-generated animation. Examples of suitable communication interface 104 include a wire based network or communication interface, optical based network or communication interface, wireless network or communication interface, or a combination of wired, optical, and/or wireless networks or communication interfaces.

The system 100 further comprises a control system 108 including at least one controller 110 communicatively coupled to the manipulator apparatus 102 and the other components of the system 100 via the communication interface 104. The controller 110 comprises a control unit or computational device having one or more electronic processors, within which is embedded a set of control instructions provided as processor-executable data that, when executed, cause the controller 110 to issue actuation commands or control signals to the manipulator system 102, causing the manipulator 121 to carry out various methods and actions, e.g., identify and manipulate items. The one or more electronic processors may include at least one logic processing unit, such as one or more microprocessors, central processing units (CPUs), digital signal processors (DSPs), graphics processing units (GPUs), application-specific integrated circuits (ASICs), programmable gate arrays (PGAs), programmed logic units (PLUs), or the like. In some implementations, the controller 110 is a smaller processor-based device like a mobile phone, single board computer, embedded computer, or the like, which may be termed or referred to interchangeably as a computer, server, or an analyser. The set of control instructions may also be provided as processor-executable data associated with the operation of the system 100 and manipulator apparatus 102 included in a non-transitory processor-readable storage device 112, which forms part of the system 100 and is accessible to the controller 110 via the communication interface 104. In some implementations, storage device 112 includes two or more distinct devices. The storage device 112 can, for example, include one or more volatile storage devices, for instance random access memory (RAM), and one or more non-volatile storage devices, for instance read only memory (ROM), flash memory, magnetic hard disk (HDD), optical disk, solid state disk (SSD), or the like. A person of skill in the art will appreciate storage may be implemented in a variety of ways such as a read only memory (ROM), random access memory (RAM), hard disk drive (HDD), network drive, flash memory, digital versatile disk (DVD), any other forms of computer- and processor-readable memory or storage medium, and/or a combination thereof. Storage can be read only or read-write as needed.

The system 100 includes a sensor subsystem 114 comprising one or more sensors that detect, sense, or measure conditions or states of manipulator apparatus 102 and/or conditions in the environment or workspace in which the manipulator 121 operates, and produce or provide corresponding sensor data or information. Sensor information includes environmental sensor information, representative of environmental conditions within the workspace of the manipulator 121, as well as information representative of condition or state of the manipulator apparatus 102, including the various subsystems and components thereof, and characteristics of the item to be manipulated. The acquired data may be transmitted via the communication interface 104 to the controller 110 for directing the manipulator 121 accordingly. Such information can, for example, include diagnostic sensor information that is useful in diagnosing a condition or state of the manipulator apparatus 102 or the environment in which manipulator 121 operates. For example, such sensors may include contact sensors, force sensors, strain gages, vibration sensors, position sensors, attitude sensors, accelerometers, and the like. Such sensors may include one or more of cameras or imagers 116 (e.g., responsive in visible and/or nonvisible ranges of the electromagnetic spectrum including for instance infrared and ultraviolet), radars, sonars, touch sensors, pressure sensors, load cells, microphones 118, meteorological sensors, chemical sensors, or the like. In some implementations, the diagnostic sensors include sensors to monitor a condition and/or health of an on-board power source within the manipulator apparatus 102 (e.g., battery array, ultra-capacitor array, fuel cell array). In some implementations, the one or more sensors comprise receivers to receive position and/or orientation information concerning the manipulator 121. For example, a global position system (GPS) receiver to receive GPS data, two more time signals for the controller 110 to create a position measurement based on data in the signals, such as, time of flight, signal strength, or other data to effect a position measurement. Also, for example, one or more accelerometers, which also form part of the manipulator apparatus 102, could be provided on the manipulator 121 to acquire inertial or directional data, in one, two, or three axes, regarding the movement thereof.

The manipulator 121 may be piloted by a human operator at the operator interface 106. In human operator controlled or piloted mode, the human operator observes representations of sensor data, for example, video, audio, or haptic data received from one or more sensors of the sensor subsystem 114. The human operator then acts, conditioned by a perception of the representation of the data, and creates information or executable control instructions to direct the manipulator 121 accordingly. In piloted mode, the manipulator apparatus 102 may execute control instructions in real-time (e.g., without added delay) as received from the operator interface 106 without taking into account other control instructions based on sensed information.

In some implementations, the manipulator apparatus 102 operates autonomously. That is, without a human operator creating control instructions at the operator interface 106 for directing the manipulator 121. The manipulator apparatus 102 may operate in an autonomous control mode by executing autonomous control instructions. For example, the controller 110 can use sensor data from one or more sensors of the sensor subsystem 114, the sensor data being associated with operator generated control instructions from one or more times the manipulator apparatus 102 was in piloted mode to generate autonomous control instructions for subsequent use. For example, by using deep learning techniques to extract features from the sensor data such that in autonomous mode the manipulator apparatus 102 autonomously recognize features or conditions in its environment and the item to be manipulated, and in response perform a defined act, set of acts, a task, or a pipeline or sequence of tasks. In some implementations, the controller 110 autonomously recognises features and/or conditions in the environment surrounding the manipulator 121, as represented by a sensor data from the sensor subsystem 114 and one or more virtual items composited into the environment, and in response to being presented with the representation, issue control signals to the manipulator apparatus 102 to perform one or more actions or tasks.

In some instances, the manipulator apparatus 102 may be controlled autonomously at one time, while being piloted, operated, or controlled by a human operator at another time. That is, operate under an autonomous control mode and change to operate under a piloted mode (i.e., non-autonomous). In another mode of operation, the manipulator apparatus 102 can replay or execute control instructions previously carried out in a human operator controlled (or piloted) mode. That is, the manipulator apparatus 102 can operate without sensor data based on replayed pilot data.

The manipulator apparatus 102 further includes a communication interface subsystem 124, e.g., a network interface device, that is communicatively coupled to a bus 126 and provides bi-directional communication with other components of the system 100 (e.g., the controller 110) via the communication interface 104. The communication interface subsystem 124 may be any circuitry affecting bidirectional communication of processor-readable data, and processor-executable instructions, for instance radios (e.g., radio or microwave frequency transmitters, receivers, transceivers), communications ports and/or associated controllers. Suitable communication protocols include FTP, HTTP, Web Services, SOAP with XML, WI-FI^{™} compliant, BLUETOOTH^{™} compliant, cellular (e.g., GSM, CDMA), and the like.

The manipulator 121 is an electro-mechanical machine comprising one or more appendages, such as a robotic arm 120, and a gripper assembly or end-effector 122 mounted on an end of the robotic arm 120. The gripper assembly 122 is a device of complex design configured to interact with the environment in order to perform a number of tasks, including, for example, gripping, grasping, releasably engaging or otherwise interacting with an item. The manipulator apparatus 102 further includes a motion subsystem 130, communicatively coupled to the robotic arm 120 and gripper assembly 122, comprising one or more motors, solenoids, other actuators, linkages, drive-belts, and the like operable to cause the robotic arm 120 and/or gripper assembly 122 to move within a range of motions in accordance with the actuation commands or control signals issued by the controller 110. The motion subsystem 130 is communicatively coupled to the controller 110 via the bus 126.

The manipulator apparatus 102 also includes an output subsystem 128 comprising one or more output devices, such as speakers, lights, and displays that enable the manipulator apparatus 102 to send signals into the workspace in order to communicate with, for example, an operator and/or another manipulator apparatus 102.

A person of ordinary skill in the art will appreciate the components in manipulator apparatus 102 may be varied, combined, split, omitted, or the like. In some examples one or more of the communication interface subsystem 124, the output subsystem 128, and/or the motion subsystem 130 may be combined. In other examples, one or more of the subsystems (e.g., the motion subsystem 130) are split into further subsystems.

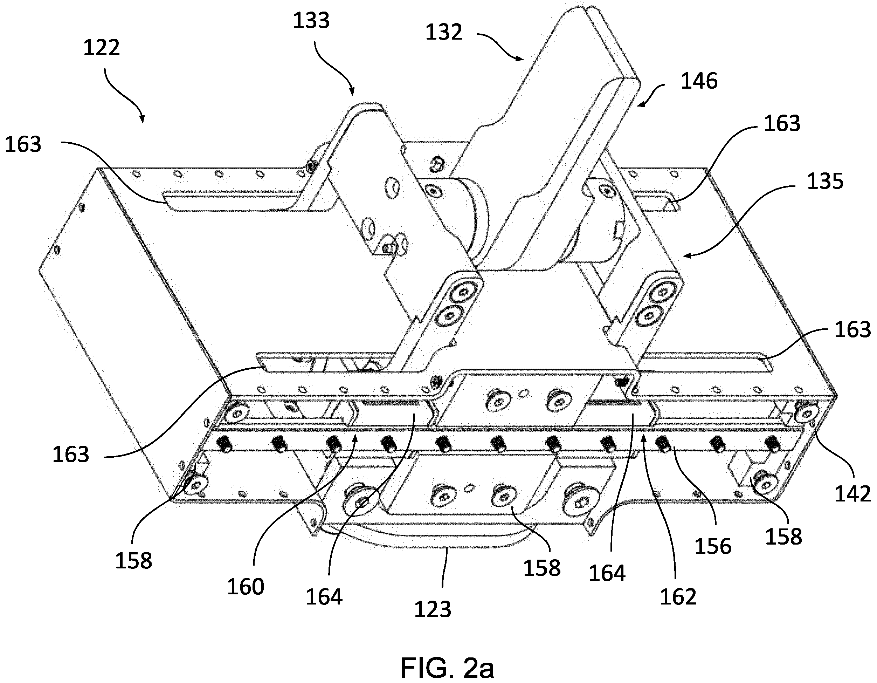

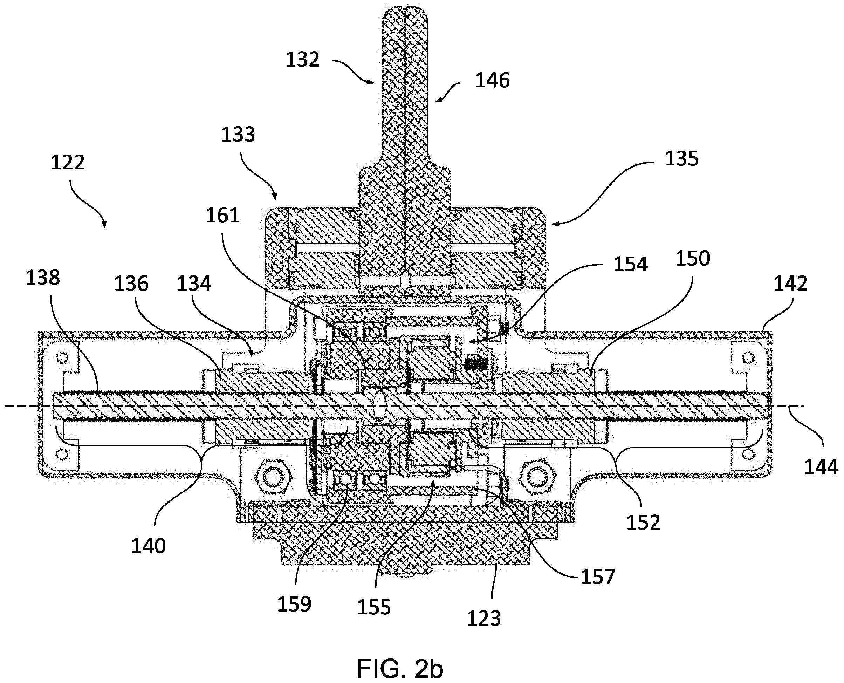

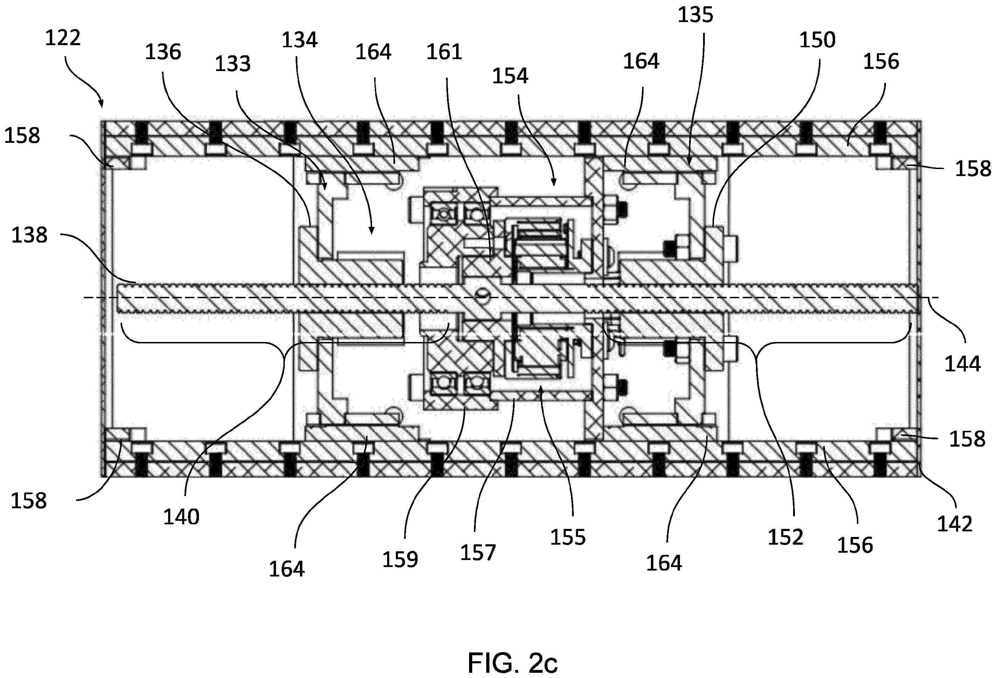

As previously mentioned, the manipulator 121 is configured to move articles, work pieces, or items from a first location, such as a storage tote box, and place the item in a second location, such as a delivery tote box, and Figures 2a to 2c show an example of a gripper assembly 122 suitable for carrying out such operations. In this example, the gripper assembly 122 comprises a housing 142, a side section of which has been removed in Figure 2a to aid this description, and a connector or interface 123 for connecting the gripper assembly 122 to the robotic arm 120. The gripper assembly 122 further comprises first and second finger assemblies 132, 146, which are shown in a closed configuration. The finger assemblies 132, 146 are configured to move away from or towards each other as is necessary to grasp or release an item. To that end, the gripper assembly further comprises a ball screw actuator assembly, generally designated by 134, comprising first and second ball screw nuts 136, 150, together with a ball screw shaft 138. The first ball screw nut 136 is connected to the first finger assembly 132 by a first support assembly 133, and the second ball screw nut 150 is connected to the second finger assembly 132 by a second support assembly 135. The support assemblies 133, 135 extend through elongated openings 163 within the housing 142, the elongated openings 163 being configured to facilitate the lateral movements of the finger assemblies 132, 146. The ball screw shaft 138 comprises a first section 140 having one of a right- or left-hand helical raceway upon which the first ball screw nut 136, which has a complimentary helical raceway, is movably mounted, and a second section 152 having the other of a right- or left-hand helical raceway upon which the second ball screw nut 150 is movably mounted. The ball screw actuator assembly 134 further comprises an actuator 154 directly connected to the ball screw shaft 138 and configured to rotate the ball screw shaft 138 about its longitudinal axis 144 in clockwise and anticlockwise directions. In this embodiment, the actuator 154 comprises a DC motor 155 held within a motor housing 157, although in other embodiments the actuator 154 might instead include an AC motor. The ball screw shaft 138 is fastened to a rotor 161 and rotatably supported in the motor housing 157 by a support bearing 159. The first and second ball screw nuts 136, 150 and the ball screw shaft 138 are configured to move the first and second finger assemblies 132, 146 towards each other when the ball screw shaft 138 is rotated by the actuator 154, upon receipt at the motion subsystem 130 of an appropriate actuation command issued by the controller 110, in one of the clockwise or anticlockwise directions, in order that the finger assemblies 132, 146 can grasp an item, and to move the first and second finger assemblies 132, 146 away from each other, increasing the gap therebetween, when the ball screw shaft 138 is rotated by the actuator 154 in the other of the clockwise or anticlockwise directions. This arrangement, of using a ball screw actuator assembly 134 to provide a direct connection between the actuator 154 and the ball screw shaft 138 to move the finger assemblies 132, 146, is advantageous for a number of reasons.

Firstly, it enables the gripper assembly 122 to be controlled using a direct force control scheme as opposed to using a position control scheme. When using position control schemes, target positions for finger assemblies are determined based on an item to be manipulated or grasped and the force applied to the item is a function of the target positions. Such control schemes are appropriate for applications in which the items to be manipulated have generally similar or the same characteristics. In other applications, however, such as an online grocery retail operation, having 1,000s or 10,000s of items of varying characteristics (e.g., shape, size, weight, rigidity, coefficient of friction, etc.,), such control schemes are inappropriate as two items of similar sizes might be differ in other respects, and so the force applied to them by the finger assemblies, determined as a function of their respective positions, might be unsuitable. That is, in most instances, the relationship between the applied force and position of the finger assemblies is often unknown when using position control schemes, and so the use of force sensors is required in order to measure gripping force. With the present arrangement, however, which lends itself to a direct force control scheme, target positions or any feedback regarding the positions of the finger assemblies 132, 146 is not required. Instead, the output torque of the actuator 154 is controlled to match the desired force applied by finger assemblies 132, 146 to the item being manipulated. This is made possible by the novel arrangement of using a ball screw actuator assembly 134 that includes a direct connection between the actuator 154 and the ball screw shaft 138 to move the finger assemblies 132, 146. The ball screw actuator assembly 134 is a low friction transmission device, which, in this instance, is used to convert output torque of the actuator 154 to axially reciprocating movement of the finger assemblies 132, 146. Because it is a low friction transmission device, and in the absence of other transmission mechanisms, such as a gearing arrangement between the actuator 154 and the ball screw shaft 138, the applied or gripping force of the finger assemblies 132, 146 is directly proportional to the torque output of the actuator 154, meaning that the applied force can be accurately mapped with respect to the torque output to provide precise direct force control capability without the need for external force measurement.

Secondly, because the ball screw actuator assembly 134 provides a low friction transmission between the actuator 154 and finger assemblies 132, 146, the gripper assembly 122 is mechanically backdrivable. That is, the first and second finger assemblies 132, 146 can be moved manually, towards or away from each other, to effect rotation of the ball screw shaft 138. This ensures that the gripper assembly 122 has a degree of compliance, permitting safe physical interaction with its workspace.

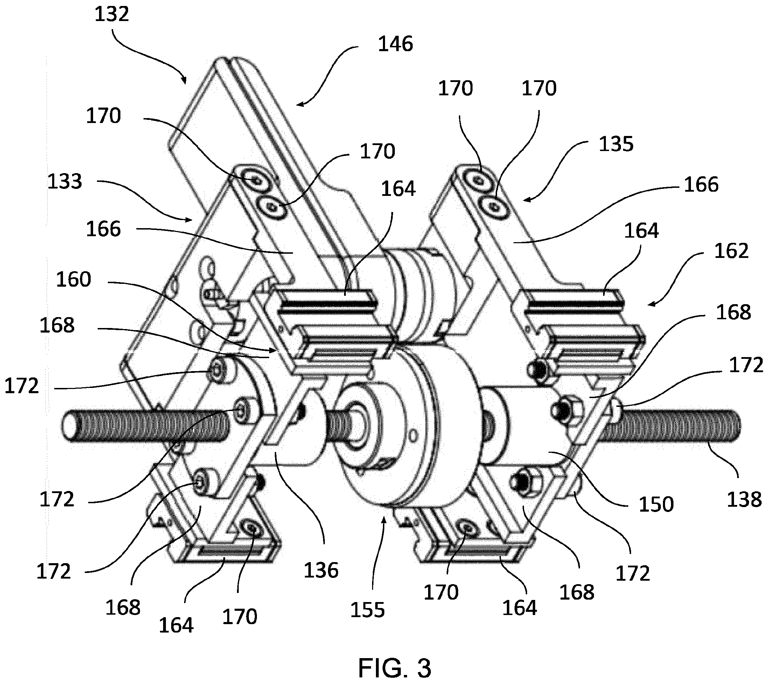

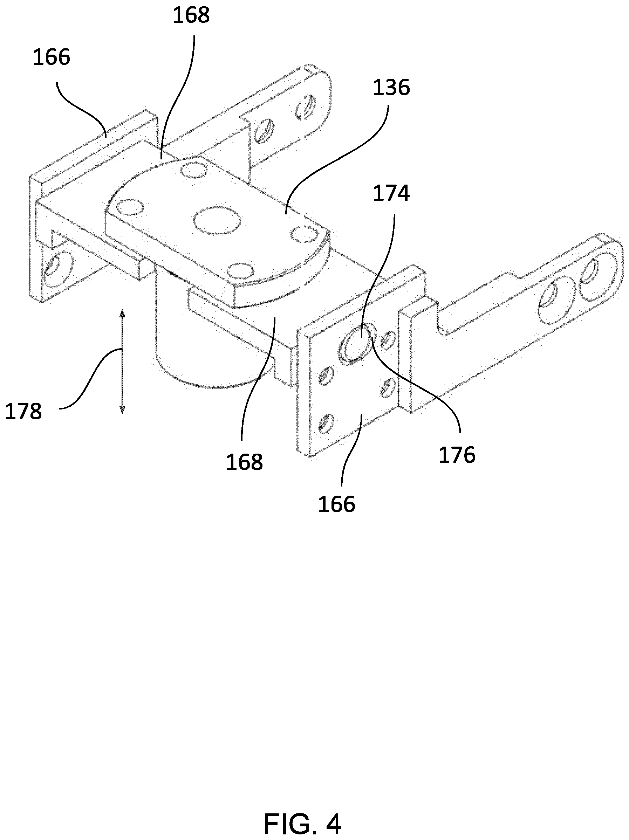

In this example, the gripper assembly 122 further comprises two guide rails 156 supported within the housing 142 on either side of the ball screw shaft 138 by mounts 158. The guide rails 156 function, in part, to guide the lateral movements of the finger assemblies 132, 146 and to prevent the first and second ball screw nuts 136, 150 from rotating when the ball screw shaft 138 is rotated, fixing the rotational position of the first and second ball screw nuts 136, 150. To that end, the gripper assembly 122 further comprises first and second carriage assemblies 160, 162, each comprising two linear guides 164 slidably mounted on the guide rails 156. With reference to Figure 3, the first support assembly 133 is configured to connect the first ball screw nut 136 and first finger assembly 132 to the first carriage assembly 160, while the second support assembly 135 is configured to connect the second ball screw nut 150 and second finger assembly 146 to the second carriage assembly 162. Each support assembly 133, 135 comprises a pair of support arms 166 and a pair of ball screw nut connectors 168. Each support arm 166 is rigidly connected to a respective finger assembly 132, 146 and linear guides 164 by a first plurality of fasteners 170, some of which cannot be seen in Figure 3. Similarly, each ball screw nut connector 168 is securely fastened to either ball screw nut 136, 150 by a second plurality of fasteners 172, but is movably connected to a respective support arm 166, providing an indirect connection to a respective linear guide 164. With reference to Figure 4, the movable connection comprises a generally circular projection 174 extending from one end of the ball screw nut connectors 168 into an open channel 176 formed in the part of the support arm 166 that fastens to the linear guide 164. The width of the channel 176 is such that there is no play between it and the projection 174 when the ball screw nut connectors 168 are moved with the ball screws 136, 150. This ensures that movement of the ball screws 136, 150 along the ball screw shaft 138, as indicated by arrow 178, is accurately translated to the finger assemblies 132, 146. However, the length of the channel 176 (i.e., the dimension of the channel parallel to the major axis of the support arm 166) is elongated in order to allow play between the projection 174 and the channel 176 along the length of the channel 176. That is, the projection 174 and channel 176 are configured to allow relative movement therebetween along the length of the channel 176, whilst preventing such movement across the width of the channel 176. Specifically, the channel 176 is sufficiently long enough to ensure that the projection 174 cannot contact either end of the channel 176 during use, thereby preventing the projection 174 from bearing any load via its respective support arm 166. This configuration isolates the ball screw actuator assembly 134 from any forces applied to the gripper assembly 122 during the manipulation of an item and transfers them to the carriage assemblies 160, 162 and guide rails 156. In particular, it ensures that any radial forces are not brought to bear on the ball screw shaft 138, which could bend the ball screw shaft 138 and consequently increase the friction between the ball screws 136, 150 and ball screw shaft 138.

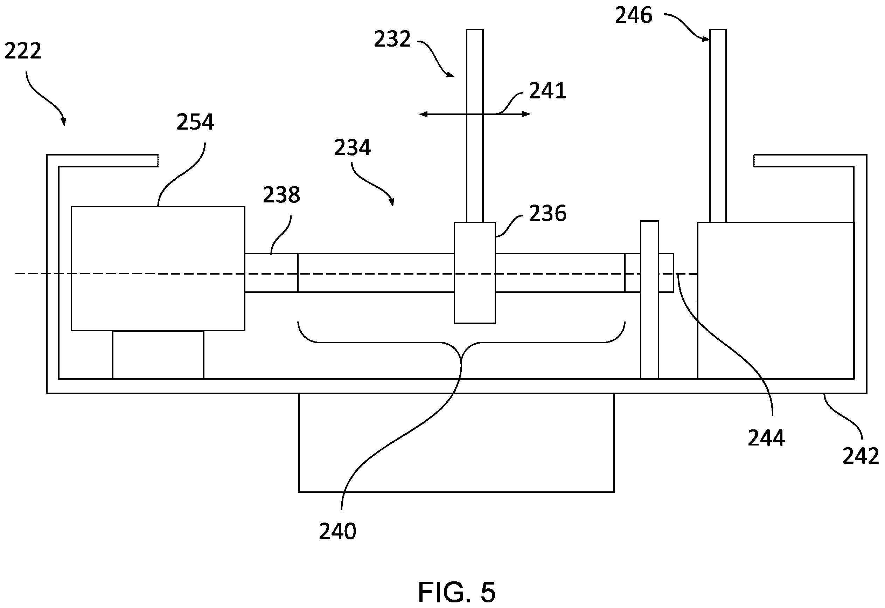

In another example, shown in Figure 5, the gripper assembly 222 comprises a first finger assembly 232 and a ball screw actuator assembly 234. The ball screw actuator assembly 234 comprises a ball screw nut 236 connected to the first finger assembly 232 and a ball screw shaft 238 comprising a section 240 upon which the ball screw nut 236 is movably mounted so as to move the first finger assembly 232 back and forth along the section 240 as indicated by arrow 241. The ball screw shaft 238 is suitably secured within a housing 242 of the gripper assembly 222 such that it is rotatable about its longitudinal axis 244 as provided by an actuator 254, which is directly connected to the ball screw shaft 238 and forms part of the ball screw actuator assembly 234. The gripper assembly 222 further comprises a second finger assembly 246 that is held within the housing 242 in a fixed position relative to the first finger assembly 232. The actuator 254 is positioned at an end of the housing 242 remote from the second finger assembly 246 and is configured to rotate the ball screw shaft 238 about its longitudinal axis 244 in either a clockwise or anticlockwise direction. The ball screw nut 236 and ball screw shaft 238 are configured to move the first finger assembly 232 in a direction of the second finger assembly 246 when the ball screw shaft 238 is rotated by the actuator 254, upon receipt at the motion subsystem 130 of an appropriate actuation command issued by the controller 110, in one of a clockwise or anticlockwise direction and to move the first finger assembly 232 in a direction away from the second finger assembly 246 when the ball screw shaft 238 is rotated in the other of the clockwise or anticlockwise directions.

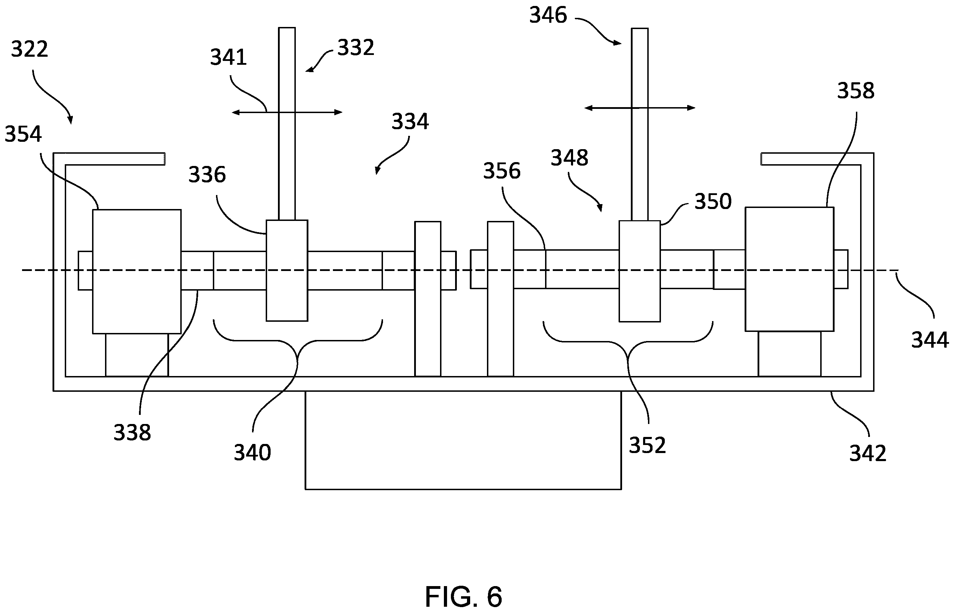

In yet another example, shown in Figure 6, the gripper assembly 322 comprises a first finger assembly 332 and a ball screw actuator assembly 334. The ball screw actuator assembly 334 comprises a first ball screw nut 336 connected to the first finger assembly 332 and a first ball screw shaft 338 comprising a section 340 upon which the first ball screw nut 336 is movably mounted so as to move the first finger assembly 332 back and forth along the first section 340 as indicated by arrow 341. The first ball screw shaft 338 is suitably secured within a housing 342 of the gripper assembly 322 such that it is rotatable about its longitudinal axis 344. The ball screw actuator assembly 334 further comprises a first actuator 354 directly connected to the first ball screw shaft 338 and configured to rotate the first ball screw shaft 338 about its longitudinal axis 344 in either a clockwise or anticlockwise direction. The ball screw nut 336 and ball screw shaft 338 are configured to move the first finger assembly 332 in a direction of a second finger assembly 346 when the first ball screw shaft 338 is rotated by the first actuator 354 in one of a clockwise or anticlockwise direction and to move the first finger assembly 332 in a direction away from the second finger assembly 346 when the first ball screw shaft 338 is rotated in the other of the clockwise or anticlockwise directions. The ball screw actuator assembly 334 further comprises a second ball screw nut 350 connected to a second finger assembly 346 and a second ball screw shaft 356 rotatable about its longitudinal axis 344. The second ball screw shaft 356 comprises a section 352 upon which the second ball screw nut 350 is movably mounted. The ball screw actuator assembly 334 further comprises a second actuator 358 directly connected to the second ball screw shaft 356 and configured to rotate the second ball screw shaft 356 about its longitudinal axis 344. The second ball screw nut 350 and second ball screw shaft 356 are configured to move the second finger assembly 346 in a direction of the first finger assembly 332 when the second ball screw shaft 356 is rotated in one of the clockwise or anticlockwise directions and to move the second finger assembly 346 in a direction away from the first finger assembly 332 when the second ball screw shaft 356 is rotated in the other of the clockwise or anticlockwise directions.

## Claims

1. A gripper assembly (122, 222, 322) for a robotic manipulator (121), the gripper assembly (122, 222, 322) comprising:
first and second finger assemblies (132, 232, 332; 146, 246, 346);
a guide rail (156);
a first carriage assembly (160) movably mounted to the guide rail (156);
a ball screw actuator assembly (134, 234, 334) comprising:
a first ball screw nut (136, 236, 336) connected to the first finger assembly (132, 232, 332); and,
a ball screw shaft (138, 238, 338) comprising a first section (140, 240, 340) upon which the first ball screw nut (136, 236, 336) is movably mounted, the ball screw shaft (138, 238, 338) being rotatable about its longitudinal axis;
an actuator (154, 254, 354) directly connected to the ball screw shaft (138, 238, 338) and configured to rotate the ball screw shaft (138, 238, 338) about its longitudinal axis,
wherein the ball screw nut (136, 236, 336) and ball screw shaft (138, 238, 338) are configured to move the first finger assembly (132, 232, 332) in a direction of the second finger assembly (146, 246, 346) when the ball screw shaft (138) is rotated in one of a clockwise or anticlockwise direction and to move the first finger assembly (132, 232, 332) in a direction away from the second finger assembly (146, 246, 346) when the ball screw shaft (138, 238, 338) is rotated in the other of the clockwise or anticlockwise directions, the gripper assembly (122, 222, 322) further comprising:
a first support assembly (133) configured to connect the first ball screw nut (136, 236, 336) and the first finger assembly (132, 232, 332) to the first carriage assembly (160),
**characterised in that**
the first support assembly (133) is configured to provide a rigid connection between the first finger assembly (132) and the first carriage assembly (160) and a movable connection between the first ball screw nut (136, 236, 336) and the first carriage assembly (160), the movable connection being configured to isolate the ball screw actuator assembly (134, 234, 334) from forces applied to the gripper assembly (122, 222, 322) during the manipulation of an item and to transfer them to the first carriage assembly (160) and the guide rail (156).

2. A gripper assembly (122) according to claim 1, wherein the ball screw actuator assembly (134) further comprises a second ball screw nut (150) connected to the second finger assembly (146) and wherein the ball screw shaft (138) further comprises a second section (152) upon which the second ball screw nut (150) is movably mounted and wherein the first and second ball screw nuts (136, 150) and the ball screw shaft (138) are configured to move the first and second finger assemblies (132, 146) towards each other when the ball screw shaft (138) is rotated in one of the clockwise or anticlockwise directions and to move the first and second finger assemblies (132, 146) away from each other when the ball screw shaft (138) is rotated in the other of the clockwise or anticlockwise directions.

3. A gripper assembly (122) according to claim 2, further comprising:
a second carriage assembly (162) movably mounted to the one or more guide rails (156); and,
a second support assembly (135) configured to connect the second ball screw nut (150) and the second finger assembly (146) to the second carriage assembly (162).

4. A gripper assembly (122) according to claim 3, wherein the second support assembly (135) is configured to provide a rigid connection between the second finger assembly (146) and the second carriage assembly (162) and a movable connection between the second ball screw nut (150) and the second carriage assembly (162).

5. A gripper assembly (122) according to any preceding claim, wherein the guide rail (156) comprises two guide rails (156), each guide rail (156) of the two guide rails being positioned either side of the ball screw shaft (138).

6. A gripper assembly (122) according to any one of claims 2 to 5, wherein the actuator (154) is located between the first and second sections (140, 152) of the ball screw shaft (138).

7. A gripper assembly (122) according to any preceding claim, wherein the actuator (154) is located at one end of the ball screw shaft (138).

8. A gripper assembly (122) according to any preceding claim, wherein the first section (140) of the ball screw shaft (138) comprises one of a right- or left-hand helical raceway.

9. A gripper assembly (122) according to claim 8 when dependent on claim 2 or any claim dependent thereon, wherein the second section (152) of the ball screw shaft (138) comprises the other of the right- or left-hand helical raceways.

10. A gripper assembly (322) according to claim 1, wherein the ball screw actuator assembly (334) further comprises:
a second ball screw nut (350) connected to the second finger assembly (146, 346);
a second ball screw shaft (356) comprising a section (352) upon which the second ball screw nut (350) is movably mounted, the second ball screw shaft (356) being rotatable about its longitudinal axis; and,
a second actuator (358) directly connected to the second ball screw shaft (356) and configured to rotate the second ball screw shaft (356) about its longitudinal axis, wherein the second ball screw nut (350) and second ball screw shaft (356) are configured to move the second finger assembly (346) in a direction of the first finger assembly (332) when the second ball screw shaft (356) is rotated in one of the clockwise or anticlockwise directions and to move the second finger assembly (346) in a direction away from the first finger assembly (332) when the second ball screw shaft (356) is rotated in the other of the clockwise or anticlockwise directions.

11. A robotic manipulator (121) comprising a gripper assembly (122, 222, 322) according to any preceding claim.

12. A manipulator apparatus (102) comprising a robotic manipulator (121) according to claim 11.

## Patentansprüche

1. Greiferanordnung (122, 222, 322) für einen Robotermanipulator (121), wobei die Greiferanordnung (122, 222, 322) Folgendes umfasst:
eine erste und eine zweite Fingeranordnung (132, 232, 332; 146, 246, 346);
eine Führungsschiene (156);
eine erste Schlittenanordnung (160), die beweglich an der Führungsschiene (156) montiert ist;
eine Kugelspindelaktoranordnung (134, 234, 334), die Folgendes umfasst:
eine erste Kugelspindelmutter (136, 236, 336), die mit der ersten Fingeranordnung (132, 232, 332) verbunden ist; und
eine Kugelspindelwelle (138, 238, 338), die einen ersten Abschnitt (140, 240, 340) umfasst, auf dem die erste Kugelspindelmutter (136, 236, 336) beweglich montiert ist, wobei die Kugelspindelwelle (138, 238, 338) um ihre Längsachse drehbar ist;
einen Aktor (154, 254, 354), der direkt mit der Kugelspindelwelle (138, 238, 338) verbunden und konfiguriert ist, um die Kugelspindelwelle (138, 238, 338) um ihre Längsachse zu drehen,
wobei die Kugelspindelmutter (136, 236, 336) und die Kugelspindelwelle (138, 238, 338) konfiguriert sind, um die erste Fingeranordnung (132, 232, 332) in eine Richtung der zweiten Fingeranordnung (146, 246, 346) zu bewegen, wenn die Kugelspindelwelle (138) in eine einer Richtung im Uhrzeigersinn oder gegen den Uhrzeigersinn gedreht wird, und um die erste Fingeranordnung (132, 232, 332) in eine Richtung weg von der zweiten Fingeranordnung (146, 246, 346) zu bewegen, wenn die Kugelspindelwelle (138, 238, 338) in die andere von der Richtung im Uhrzeigersinn oder gegen den Uhrzeigersinn gedreht wird, wobei die Greiferanordnung (122, 222, 322) ferner Folgendes umfasst:
eine erste Stützanordnung (133), die konfiguriert ist, um die erste Kugelspindelmutter (136, 236, 336) und die erste Fingeranordnung (132, 232, 332) mit der ersten Schlittenanordnung (160) zu verbinden, **dadurch gekennzeichnet, dass**
die erste Stützanordnung (133) konfiguriert ist, um eine starre Verbindung zwischen der ersten Fingeranordnung (132) und der ersten Schlittenanordnung (160) und eine bewegliche Verbindung zwischen der ersten Kugelspindelmutter (136, 236, 336) und der ersten Schlittenanordnung (160) bereitzustellen, wobei die bewegliche Verbindung konfiguriert ist, um die Kugelspindelaktoranordnung (134, 234, 334) von Kräften zu isolieren, die während der Handhabung eines Gegenstands auf die Greiferanordnung (122, 222, 322) ausgeübt werden, und um sie auf die erste Schlittenanordnung (160) und die Führungsschiene (156) zu übertragen.

2. Greiferanordnung (122) nach Anspruch 1, wobei die Kugelspindelaktoranordnung (134) ferner eine zweite Kugelspindelmutter (150) umfasst, die mit der zweiten Fingeranordnung (146) verbunden ist, und wobei die Kugelspindelwelle (138) ferner einen zweiten Abschnitt (152) umfasst, auf dem die zweite Kugelspindelmutter (150) beweglich montiert ist, und wobei die erste und die zweite Kugelspindelmutter (136, 150) und die Kugelspindelwelle (138) konfiguriert sind, um die erste und die zweite Fingeranordnung (132, 146) aufeinander zu zu bewegen, wenn die Kugelspindelwelle (138) in eine Richtung im Uhrzeigersinn oder gegen den Uhrzeigersinn gedreht wird, und um die erste und die zweite Fingeranordnung (132, 146) voneinander weg zu bewegen, wenn die Kugelspindelwelle (138) in die andere von der Richtung im Uhrzeigersinn oder gegen den Uhrzeigersinn gedreht wird.

3. Greiferanordnung (122) nach Anspruch 2, ferner umfassend:
eine zweite Schlittenanordnung (162), die beweglich an der einen oder den mehreren Führungsschienen (156) montiert ist; und
eine zweite Stützanordnung (135), die konfiguriert ist, um die zweite Kugelspindelmutter (150) und die zweite Fingeranordnung (146) mit der zweiten Schlittenanordnung (162) zu verbinden.

4. Greiferanordnung (122) nach Anspruch 3, wobei die zweite Stützanordnung (135) konfiguriert ist, um eine starre Verbindung zwischen der zweiten Fingeranordnung (146) und der zweiten Schlittenanordnung (162) und eine bewegliche Verbindung zwischen der zweiten Kugelspindelmutter (150) und der zweiten Schlittenanordnung (162) bereitzustellen.

5. Greiferanordnung (122) nach einem der vorhergehenden Ansprüche, wobei die Führungsschiene (156) zwei Führungsschienen (156) umfasst, wobei jede Führungsschiene (156) der zwei Führungsschienen auf jeder Seite der Kugelspindelwelle (138) positioniert ist.

6. Greiferanordnung (122) nach einem der Ansprüche 2 bis 5, wobei der Aktor (154) zwischen dem ersten und dem zweiten Abschnitt (140, 152) der Kugelspindelwelle (138) angeordnet ist.

7. Greiferanordnung (122) nach einem der vorhergehenden Ansprüche, wobei der Aktor (154) an einem Ende der Kugelspindelwelle (138) angeordnet ist.

8. Greiferanordnung (122) nach einem der vorhergehenden Ansprüche, wobei der erste Abschnitt (140) der Kugelspindelwelle (138) eine von einer rechtsläufigen oder linksläufigen spiralförmigen Laufbahn umfasst.

9. Greiferanordnung (122) nach Anspruch 8, wenn abhängig von Anspruch 2 oder einem davon abhängigen Anspruch, wobei der zweite Abschnitt (152) der Kugelspindelwelle (138) die andere von der rechtsläufigen oder linksläufigen spiralförmigen Laufbahn umfasst.

10. Greiferanordnung (322) nach Anspruch 1, wobei die Kugelspindelaktoranordnung (334) ferner Folgendes umfasst:
eine zweite Kugelspindelmutter (350), die mit der zweiten Fingeranordnung (146, 346) verbunden ist;
eine zweite Kugelspindelwelle (356), die einen Abschnitt (352) umfasst, auf dem die zweite Kugelspindelmutter (350) beweglich montiert ist, wobei die zweite Kugelspindelwelle (356) um ihre Längsachse drehbar ist; und
einen zweiten Aktor (358), der direkt mit der zweiten Kugelspindelwelle (356) verbunden und konfiguriert ist, um die zweite Kugelspindelwelle (356) um ihre Längsachse zu drehen, wobei die zweite Kugelspindelmutter (350) und die zweite Kugelspindelwelle (356) konfiguriert sind, um die zweite Fingeranordnung (346) in eine Richtung der ersten Fingeranordnung (332) zu bewegen, wenn die zweite Kugelspindelwelle (356) in eine einer Richtung im Uhrzeigersinn oder gegen den Uhrzeigersinn gedreht wird, und um die zweite Fingeranordnung (346) in eine Richtung weg von der ersten Fingeranordnung (332) zu bewegen, wenn die zweite Kugelspindelwelle (356) in die andere von der Richtung im Uhrzeigersinn oder gegen den Uhrzeigersinn gedreht wird.

11. Robotermanipulator (121), umfassend eine Greiferanordnung (122, 222, 322) nach einem der vorhergehenden Ansprüche.

12. Manipulatorvorrichtung (102), umfassend einen Robotermanipulator (121) nach Anspruch 11.

## Revendications

1. Ensemble préhenseur (122, 222, 322) pour un manipulateur robotique (121), l'ensemble préhenseur (122, 222, 322) comprenant :
des premier et second ensembles de doigts (132, 232, 332 ; 146, 246, 346) ;
un rail de guidage (156) ;
un premier ensemble de chariot (160) monté de manière mobile sur le rail de guidage (156) ;
un ensemble d'actionneur de vis à billes (134, 234, 334) comprenant :
un premier écrou de vis à billes (136, 236, 336) connecté au premier ensemble de doigts (132, 232, 332) ; et,
un arbre de vis à billes (138, 238, 338) comprenant une première section (140, 240, 340) sur laquelle le premier écrou de vis à billes (136, 236, 336) est monté de manière mobile, l'arbre de vis à billes (138, 238, 338) pouvant tourner autour de son axe longitudinal ;
un actionneur (154, 254, 354) connecté directement à l'arbre de vis à billes (138, 238, 338) et configuré pour faire tourner l'arbre de vis à billes (138, 238, 338) autour de son axe longitudinal,
dans lequel l'écrou de vis à billes (136, 236, 336) et l'arbre de vis à billes (138, 238, 338) sont configurés pour déplacer le premier ensemble de doigts (132, 232, 332) dans une direction du second ensemble de doigts (146, 246, 346) lorsque l'arbre de vis à billes (138) est tourné dans l'un des sens des aiguilles d'une montre ou inverse des aiguilles d'une montre, et pour déplacer le premier ensemble de doigts (132, 232, 332) dans une direction s'éloignant du second ensemble de doigts (146, 246, 346) lorsque l'arbre de vis à billes (138, 238, 338) est tourné dans l'autre des sens des aiguilles d'une montre ou inverse des aiguilles d'une montre, l'ensemble préhenseur (122, 222, 322) comprenant en outre :
un premier ensemble de support (133) configuré pour connecter le premier écrou de vis à billes (136, 236, 336) et le premier ensemble de doigts (132, 232, 332) au premier ensemble de chariot (160),
**caractérisé en ce que**
le premier ensemble de support (133) est configuré pour fournir une connexion rigide entre le premier ensemble de doigts (132) et le premier ensemble de chariot (160) et une connexion mobile entre le premier écrou de vis à billes (136, 236, 336) et le premier ensemble de chariot (160), la connexion mobile étant configurée pour isoler l'ensemble d'actionneur de vis à billes (134, 234, 334) de forces appliquées à l'ensemble préhenseur (122, 222, 322) pendant la manipulation d'un article et pour les transférer au premier ensemble de chariot (160) et au rail de guidage (156).

2. Ensemble préhenseur (122) selon la revendication 1, dans lequel l'ensemble d'actionneur de vis à billes (134) comprend en outre un second écrou de vis à billes (150) connecté au second ensemble de doigts (146) et dans lequel l'arbre de vis à billes (138) comprend en outre une seconde section (152) sur laquelle le second écrou de vis à billes (150) est monté de manière mobile et dans lequel les premier et second écrous de vis à billes (136, 150) et l'arbre de vis à billes (138) sont configurés pour déplacer les premier et second ensembles de doigts (132, 146) l'un vers l'autre lorsque l'arbre de vis à billes (138) est tourné dans l'un des sens des aiguilles d'une montre ou inverse des aiguilles d'une montre, et pour déplacer les premier et second ensembles de doigts (132, 146) à l'écart l'un de l'autre lorsque l'arbre de vis à billes (138) est tourné dans l'autre des directions dans l'autre des sens des aiguilles d'une montre ou inverse des aiguilles d'une montre.

3. Ensemble préhenseur (122) selon la revendication 2, comprenant en outre :
un second ensemble de chariot (162) monté de manière mobile sur les un ou plusieurs rails de guidage (156) ; et,
un second ensemble de support (135) configuré pour connecter le second écrou de vis à billes (150) et le second ensemble de doigts (146) au second ensemble de chariot (162).

4. Ensemble préhenseur (122) selon la revendication 3, dans lequel le second ensemble de support (135) est configuré pour fournir une connexion rigide entre le second ensemble de doigts (146) et le second ensemble de chariot (162), et une connexion mobile entre le second écrou de vis à billes (150) et le second ensemble de chariot (162).

5. Ensemble préhenseur (122) selon l'une quelconque des revendications précédentes, dans lequel le rail de guidage (156) comprend deux rails de guidage (156), chaque rail de guidage (156) des deux rails de guidage étant positionné de chaque côté de l'arbre de vis à billes (138).

6. Ensemble préhenseur (122) selon l'une quelconque des revendications 2 à 5, dans lequel l'actionneur (154) est situé entre les première et seconde sections (140, 152) de l'arbre de vis à billes (138).

7. Ensemble préhenseur (122) selon l'une quelconque des revendications précédentes, dans lequel l'actionneur (154) est situé à une extrémité de l'arbre de vis à billes (138).

8. Ensemble préhenseur (122) selon l'une quelconque des revendications précédentes, dans lequel la première section (140) de l'arbre de vis à billes (138) comprend l'un d'un chemin de roulement hélicoïdal de droite ou de gauche.

9. Ensemble préhenseur (122) selon la revendication 8 lorsqu'elle dépend de la revendication 2 ou de l'une quelconque des revendications qui en dépendent, dans lequel la seconde section (152) de l'arbre de vis à billes (138) comprend l'autre des chemins de roulement hélicoïdaux de droite ou de gauche.

10. Ensemble préhenseur (322) selon la revendication 1, dans lequel l'ensemble d'actionneur de vis à billes (334) comprend en outre :
un second écrou de vis à billes (350) connecté au second ensemble de doigts (146, 346) ;
un second arbre de vis à billes (356) comprenant une section (352) sur laquelle le second écrou de vis à billes (350) est monté de manière mobile, le second arbre de vis à billes (356) pouvant tourner autour de son axe longitudinal ; et,
un second actionneur (358) directement connecté au second arbre de vis à billes (356) et configuré pour faire tourner le second arbre de vis à billes (356) autour de son axe longitudinal, dans lequel le second écrou de vis à billes (350) et le second arbre de vis à billes (356) sont configurés pour déplacer le second ensemble de doigts (346) dans une direction du premier ensemble de doigts (332) lorsque le second arbre de vis à billes (356) est tourné dans l'un des sens des aiguilles d'une montre ou inverse des aiguilles d'une montre et pour déplacer le second ensemble de doigts (346) dans une direction s'éloignant du premier ensemble de doigts (332) lorsque le second arbre de vis à billes (356) est tourné dans l'autre des sens des aiguilles d'une montre ou inverse des aiguilles d'une montre.

11. Manipulateur robotique (121) comprenant un ensemble préhenseur (122, 222, 322) selon l'une quelconque des revendications précédentes.

12. Appareil de manipulation (102) comprenant un manipulateur robotique (121) selon la revendication 11.
